# EUROPEAN PATENT APPLICATION

(11) **EP 3 264 681 A1**
(43) Date of publication of application: **03.01.2018**
(21) Application number: 17176792.4
(22) Date of filing: 20.06.2017
(51) Int. Cl.: H04L 12/24, H04L 29/08, H04L 29/12

(54) **METHOD AND DEVICE FOR PROCESSING, AT A NETWORK EQUIPMENT, A PROCESSING REQUEST FROM A TERMINAL**

(30) Priority: 30.06.2016 EP 16305801
(71) Applicant: Thomson Licensing, 92130 Issy-les-Moulineaux (FR)
(72) Inventor: ONNO, Stéphane, 35576 CESSON-SEVIGNE (FR); LEGALLAIS, Yvon, 35576 CESSON-SEVIGNE (FR); GOUACHE, Stéphane, 35576 CESSON-SEVIGNE (FR)
(74) Representative: Morain, David

(57) **Abstract**

Network equipment for processing a processing request from a terminal (106) configured to be connected to a network (105) to which the network equipment (100) can be connected,
wherein it comprises:
- a receiver (210) configured to receive, from the terminal (106), a message part of the processing request;
- a relay agent (221) configured to provide a network identification information into the received message;
- a load balancer (222) configured to forward the received message to one of a plurality of processing units (224) of the network equipment (100), depending on workload information associated with said processing units (224);
and wherein said processing units (224) are further configured to retrieve, based on the network identification information extracted from the received message, context information from a database unit (225) shared between the processing units (224) and to process the received message according to a state of the processing request, the processing request state being retrieved from the context information.

## Description

### TECHNICAL FIELD

The present disclosure generally relates to the network virtualization and more particularly to network virtualization services and functions associated with cloud commodity computing hardware.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A residential or corporate gateway is a network equipment interfacing a LAN (Local Area Network) to the Internet. Such an equipment may usually provide - in addition to being a cable, DSL (Digital Subscriber Line) or fiber modem - different features like router, DNS (Domain Name System) proxy, local DHCP (Dynamic Host Configuration Protocol) server, wireless access point, firewall, DynDNS, bridge, etc.

The development of the cloud technologies (such as the virtualization of network functions) allows the emergence of a new architecture for Internet access wherein services running in the residential gateway are moved in the NSP's (Network Service Provider) datacenter. By reducing the complexity of the residential gateway, NSPs hope to reduce the time to market to deploy new services and to ease troubleshooting operations.

Networking Function Virtualization (NFV) enables the provision of network functions for home or corporate gateways directly from the NSP's facility in a cloud provisioning manner. Virtual Customer Premise Equipment (VCPE) is part of the so called Network Function Virtualization paradigm that is about executing network functions (e.g. Router, Deep Packet Inspection, DNS server, Firewall) onto commoditized hardware hosting a virtual machine infrastructure (e.g. private or public cloud infrastructure) instead of requiring specific on purpose hardware. To that end, the home gateway acts as a bridge (BRG) and needs to connect to a virtual gateway (VG) in the cloud to reach the hosts where the network functions are provisioned and run, even for basic functions such as DHCP, Firewall, DNS and UI (User Interface).

Nevertheless, the virtualization of network functions (such as DHCP function) raises some constraints because of the fact that such functions were not originally configured to fully scale with cloud infrastructure unlike applicative functions. To that end, virtual network functions (VNF) processing should also conform to a stateless paradigm to allow vertical and horizontal scaling at any time.

In particular, as already known, DHCP functions can be threefold:
- a DHCP server which offers IP leases to a DHCP client running on devices is a monolithic and stateful function and bounds to an interface that should be on the same subnet that the IP addresses it offers;
- a DHCP Relay is a transparent agent that only mediates DHCP requests from server to client but is not allowed to offer IP addresses. More particularly, when DHCP clients and associated servers do not reside on the same IP network or subnet, a DHCP relay agent can transfer DHCP messages between them. The DHCP relay agent operates as the interface between DHCP clients and the server. It listens to client requests and adds vital configuration data, such as the client's link information, which is needed by the server to allocate the address for the client. When the DHCP server responds, the DHCP relay agent forwards the reply back to the DHCP client;
- a DHCP Proxy operates between DHCP client and DHCP servers. The DHCP server function hosted within the DHCP proxy acts as a DHCP server that offers leases requested by its internal DHCP client. In that case, the proxy and upstream DHCP servers must synchronize the leases that have been given out.

Besides, a DHCP processing is defined by a set of constraints:
- the DHCP processing service shall reply to DHCP responses from an interface belonging to the same subnet;
- DHCP mainly relies on a two steps process bound together (e.g. Discover/Offer then Request/Acknowledgment) and can therefore be considered as a two steps stateful process (i.e. the capability to maintain a state, which means having information about what occurred previously);
- each DHCP lease is stick to T1/T2 timers, respectively renew and rebind timer. When renew time T1 has elapsed, the client can send a unicast DHCP renewal request to the previous server having provided an IP address. When the previous server does not respond, the client waits for the Rebind Time T2 and then sends a broadcast DHCP Request to reach a DHCP server on the network. The DHCP server should save the leases until and after expiration of the rebind time. The same client - which requests or renews a lease - expects to get the same IP address previously allocated to it;
- the DHCP server can offer IP addresses from the same subnet for any customer and the IP addresses leases must belong to each particular customer lease pool.

Thus, the basic architecture to provide a mutualized DHCP service would be to create a particular DHCP virtual network function per customer and then to deploy a list of particular VNFs on host or clusters (e.g. VNF customer from #1 to #100 on Host #1, then VNF #101 to 200 on host #2 ..). This is a way to scale (usually called "sharding") intensively used for scaling some types of databases.

For instance, KEA (http://kea.isc.org/wiki) is a current DHCP service that is able to serve DHCP leases from a database leases server. Each new lease including renewal lease corresponds to a new row in the lease file database for performances reasons. Then, an automatic leases file cleanup service is required to clean up the database from the old leases rows that are no more used.

Nevertheless, none of these above-mentioned solutions can provide a full stateless mutualized DHCP function at least for the following reasons:
- DHCP requests are spread along the time so that it is difficult to predict when they will occur;
- some customers may intensively use DHCP requests while other customers may not, therefore scaling by "sharding" is not suitable. As an example, at nighttime, few users are active comparing to daytime. In that case, a new sharding (e.g. from customer #1 to #1000) would be preferable to reduce the number of running instances;
- migrating DHCP NFV from one host to another is not as simple as web services. It requires plumbing or wiring at a network level. For example, it requires to delete a network interface from one side and create a new one on another host.

Therefore, there is a need to provide a stateless DHCP service at a customer basis.

### SUMMARY

The disclosure concerns a method for processing, at a network equipment, a processing request from a terminal configured to be associated with a network to which the network equipment can be connected. In particular, said method comprises, at the network equipment:
- receiving, from the terminal, a message provided as part of the processing request;
- inserting, at a relay agent of the network equipment, a network identification information into the received message;
- forwarding the received message to one of a plurality of processing units of the network equipment, depending on workload information associated with said processing units;
- retrieving, based on the network identification information extracted from the received message, context information from a database unit shared between the processing units; and
- processing the received message according to a state of the processing request, the processing request state being retrieved from the context information.

Thus, each processing request can be served by any processing unit on a message basis. A message part of a processing request from a given terminal can be processed by one processing unit while a subsequent message of said processing request can be processed by another processing unit.

In an embodiment, said method can further comprise an update of the state of the processing request in the database unit, after processing of the received message.

In an embodiment, the processing can comprise sending a response to the terminal, said response depending on the state of the processing request.

In an embodiment, when a discrepancy is detected between the received message and the corresponding state of the processing request, the received message can be dropped.

In an embodiment, said method can further comprise, when an update of the state of the processing request in the database unit fails due to a concurrent update by another processing unit of the network equipment:
- cancelling the processing of the received message; and
- starting over from the retrieving step.

In an embodiment, the processing request can be a DHCP request configured to obtain an IP address.

In this embodiment, the received message can be either a DISCOVER message or a REQUEST message.

In an embodiment, the network identification information can specify a VxLAN identification number associated with said network.

In an embodiment, the retrieved context information can further comprise at least one of the following information:
- IP address range;
- IP address current leases.

The present disclosure further concerns a network equipment for processing a processing request from a terminal configured to be associated with a network to which the network equipment can be connected. Said network equipment can comprise:
- a receiver configured to receive, from the terminal, a message provided as part of the processing request;
- a relay agent configured to insert a network identification information into the received message;
- a load balancer configured to forward the received message to one of a plurality of processing units of the network equipment, depending on workload information associated with said processing units;
and wherein said processing units are further configured to retrieve, based on the network identification information extracted from the received message, context information from a database unit shared between the processing units and to process the received message according to a state of the processing request, the processing request state being retrieved from the context information.

In an embodiment, the database unit can be configured to update the state of the processing request, after the processing of the received message.

In an embodiment, the processing unit can be further configured to send a response to the terminal, said response depending on the state of the processing request.

In an embodiment, when a discrepancy is detected between the received message and the corresponding state of the processing request, the received message can be dropped.

The present disclosure also relies on a network equipment for processing a processing request from a terminal configured to be associated with a network to which the network equipment can be connected. Said network equipment can comprise at least one memory and at least one processing circuitry configured to perform, at the network equipment:
- receiving, from the terminal, a message part of the processing request;
- inserting, at a relay agent of the network equipment, a network identification information into the received message;
- forwarding the received message to one of a plurality of processing units of the network equipment, depending on workload information associated with said processing units;
- retrieving, based on the network identification information extracted from the received message, context information from a database unit shared between the processing units; and
- processing the received message according to a state of the processing request, the processing request state being retrieved from the context information.

Besides, the present disclosure is further directed to a non-transitory program storage device, readable by a computer, tangibly embodying a program of instructions executable by the computer to perform a method for processing, at a network equipment, a processing request from a terminal configured to be associated with a network to which the network equipment can be connected, said method comprising:
- receiving, from the terminal, a message provided as part of the processing request;
- inserting, at a relay agent of the network equipment, a network identification information into the received message;
- forwarding the received message to one of a plurality of processing units of the network equipment, depending on workload information associated with said processing units;
- retrieving, based on the network identification information extracted from the received message, context information from a database unit shared between the processing units; and
- processing the received message according to a state of the processing request, the processing request state being retrieved from the context information.

The present disclosure also relies on computer program product which is stored on a non-transitory computer readable medium and comprises program code instructions executable by a processor for implementing a method for processing, at a network equipment, a processing request from a terminal configured to be associated with a network to which the network equipment can be connected, said method comprising:
- receiving, from the terminal, a message provided as part of the processing request;
- inserting, at a relay agent of the network equipment, a network identification information into the received message;
- forwarding the received message to one of a plurality of processing units of the network equipment, depending on workload information associated with said processing units;
- retrieving, based on the network identification information extracted from the received message, context information from a database unit shared between the processing units; and
- processing the received message according to a state of the processing request, the processing request state being retrieved from the context information.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for processing, at a network equipment, a processing request according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of an overall architecture of a network equipment adapted to implement some embodiments;
- Figure 2 shows a schematic diagram of an example of a network equipment of some embodiments;
- Figures 3 and 4 depict flow charts of examples of a method for processing a processing request implemented by some embodiments of the network equipment;
- Figure 5 is a flow chart of an exemplary method used by some embodiments to process a processing request.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

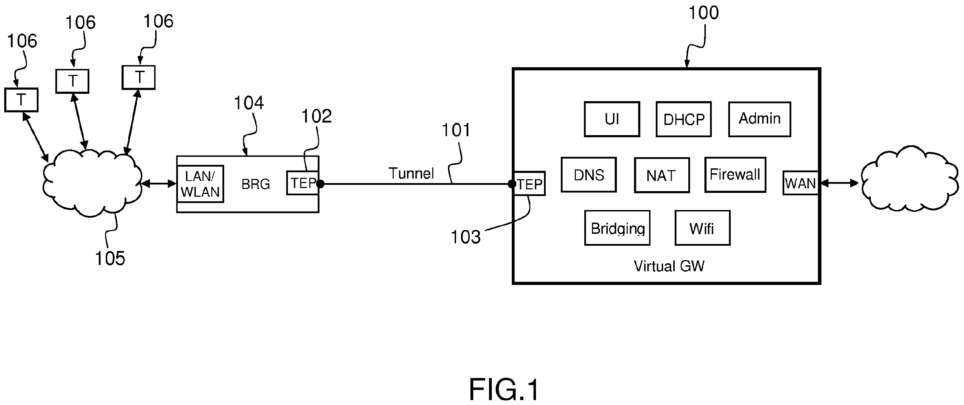

Figure 1 is a schematic diagram of an example of an overall architecture 100 of a network equipment 100, such as a virtual gateway (VGW) or a virtual customer premise equipment (VCPE). It is assumed that the gateway functionality is split in two parts, interconnected by mean of a tunnel 101, each part hosting a tunnel endpoint (TEP) 102, 103. This tunnel can be used to abstract from the underlying physical network topology while interconnecting the broadband residential gateway (BRG) (also called bridge or switch) 104 and the virtual gateway 100 at the link layer.

The left hand side (represented by the broadband residential gateway 104 (BRG)) can be considered, in one embodiment, to be at the customer's premises, whereas the right hand side (represented by the virtual gateway 100) can be located in a datacenter hosted, for instance, by a network operator. This datacenter can be distributed across multiple locations. In one embodiment, virtualized gateway functions can be mutualized to facilitate scaling and maintenance. The bridge 104 can be connected to a home (or business) network 105 (e.g. private network) such a LAN (Local Area Network) or WAN (Wide Area Network).

Virtual gateway deployment can be managed by a service orchestrator (not shown in the Figures) which coordinates the compute and networking configuration from the broadband residential gateway 104 to the datacenter so as to manage virtual gateway migration, service addition/removal or adjustment of QoS policies.

As shown in Figure 1, the virtual gateway 100 can execute network function such as UI (User Interface), DHCP server, DNS server, Firewall, NAT (Network Address Translation), bridging, Wi-Fi, etc.

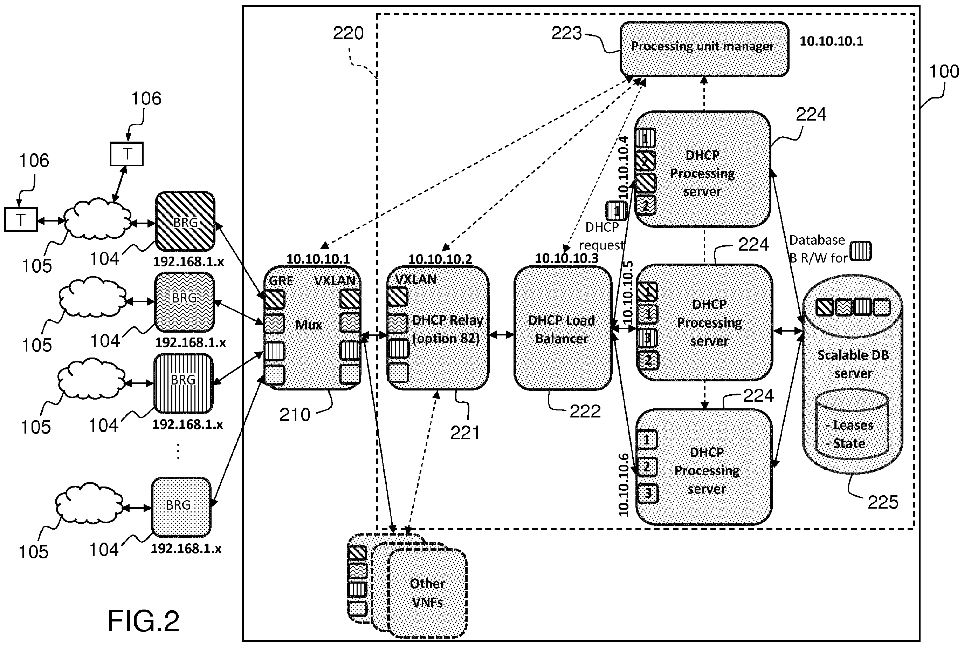

Figure 2 is a block diagram of one embodiment, depicting a virtual gateway 100 configured to implement a DHCP virtual network function (VNF) according to an embodiment of the present disclosure. For sake of clarity and simplicity, some elements of the virtual gateway are not shown in Figure 2. Obviously, the disclosure is not limited to the DHCP protocol and function.

The virtual gateway 100 can be connected to one or several broadband residential gateways 104, each BRG 104 being further adapted to be connected to a LAN 105 comprising one or several terminals 106.

As shown in Figure 2, at the entrance in the datacenter, a multiplexing function (MUX) 210 of the virtual gateway 100 can be provided to ensure connectivity between a physical broadband residential gateway 104 and the associated virtual gateway functions. The multiplexing function (MUX) 210 can be configured by the orchestrator with the customer's settings. This function can be implemented, for example, by a programmable switch, which may also provide connectivity to the WAN and cloud hosted services. In one embodiment, it is assumed this to be a large capacity switching fabric, possibly assisted by dedicated hardware. It can handle the termination of the tunnel towards the BRG 104 and can re-encapsulate the traffic towards the peer VGW services or tag the traffic with a customer ID before passing it to a mutualized service. As shown in the embodiment of Figure 1, the multiplexing function 210 can implement a tunnel end point (TEP) 103 and can re-encapsulate the traffic in a dedicated VxLAN (Virtual Extensible Local Area Network) for each customer.

Configuring the switching according to rules derived from customer specific preferences can allow building a service chain, connecting inputs and outputs of services. At a high level, gateway directed traffic can be switched to the adequate services (DHCP, DNS), whereas WAN directed traffic is switched toward NAT or firewall services.

Each service can be mutualized and parametrized with customer settings or implemented as a dedicated customer specific service. In such a manner, new services can be trialed with a subset of customers before being fully deployed and mutualized. For computing based mutualized services, using the VxLAN id as a derivation from the customer id (identifier) can allow retrieving the customer's context from a central database. For networking based services, the orchestrator is able to configure per customer-differentiated services, which can rely on the VxLAN id for flow differentiation. Finally, different overlays can be built for each VxLAN id, resulting in customer tailored service chaining. It is to be understood that the customer id identifier can be carried in a specific field of the encapsulation header of the overlay network such as VXLANs/VXLAN-GPE Identifier, GRE Identifier and so forth.

The BRG 104 can be built around its own switching fabric that interconnects the different network ports. The BRG 104 can implement in particular the logic for enabling Generic Routing Encapsulation (GRE) tunneling between the BRG 104 and a VCPE host (not shown). The GRE tunneling can be configured through an existing procedure (consecutively to a provisioning operation realized by the operator) like the one specified by Broadband Forum. Once the BRG 104 is connected to the access network, after the physical attachment (e.g. xDSL), the BRG 104 can broadcast a DHCP request. This is caught by the DHCP server residing in the first upstream IP enabled device which may be the Broadband Network Gateway (BNG, the old BRAS). The DHCP server (more exactly its associated AAA server) can authenticate the BRG 104 thanks to its MAC (Media Access Control) address and return the corresponding configuration. This corresponding configuration can include the BRG IP address and the GRE tunnel endpoint IP address which is the IP address of the virtual machine hosting the tunnel end point (TEP) virtual function of the virtual gateway 100.

Once the network configuration is obtained, the BRG 104 can be configured to provide tunnel access (here is a GRE tunnel interface) while the virtual gateway 100 can be automatically configured in the virtual gateway host infrastructure.

In addition, , as shown in the embodiment of Figure 2, in order to implement a DHCP virtual network function 220, the virtual gateway 100 can comprise a DHCP relay virtual network function 221 (also called DHCP relay agent). In one embodiment, for example, DHCP can be configured to monitor customer VXLANs in order to provide a Customer Identifier (e.g. identified by a VXLAN ID) associated with the BootP/Option 82 (which was designed to allow a DHCP relay agent to insert circuit-specific information into a message that is being forwarded to a DHCP server) on each DHCP message it receives. The DHCP relay 221 can then forward the DHCP message to a DHCP load balancer 222 as a unicast UDP DHCP message which prevents broadcast message issues. The DHCP relay 221 can be seen as the DHCP server from the customer's LAN 105, its VXLAN interface IP address can be set in accordance with the IP address range defined in DHCP parameters.

In one embodiment, the virtual gateway 100 can further comprise a DHCP load balancer 222, a cluster manage 223, one or several DHCP processing servers 224 (in the non-limitative example of Figure 2, three processing servers are illustrated) and a scalable database server 225 comprising at least one database. In a variant, the database server 225 and the associated database can be arranged in different equipments.

The DHCP load balancer 222 can compute or obtain from the processing unit manager 223 (also called cluster manager 223) workload information associated with DHCP processing servers 224 (i.e. the current workload of each processing server) and can decide to distribute the DHCP messages to balance the workload among the available DHCP processing servers 224. The load balancer 222 can redirect each DHCP message (e.g. DHCP Discover or DHCP Request) to one targeted DHCP processing server instance 224 (e.g. IP @ 10.10.10.4 to 10.10.10.6 in the example of Figure 2). If the DHCP message is duplicated, it will be processed more than once. Naturally, the load balancer 222 and the DHCP relay 221 can be embedded within a sole execution module.

It should be understood that the processing unit manager 223 can start or delete the processing server instances depending on the overall server load.

In the example shown in Figure 2, the database server 225 can be connected with every DHCP processing server 224 such that one database server 225 can be shared between a plurality of DHCP processing servers 224.

In Figure 2, it will be appreciated that the illustrated blocks or modules correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

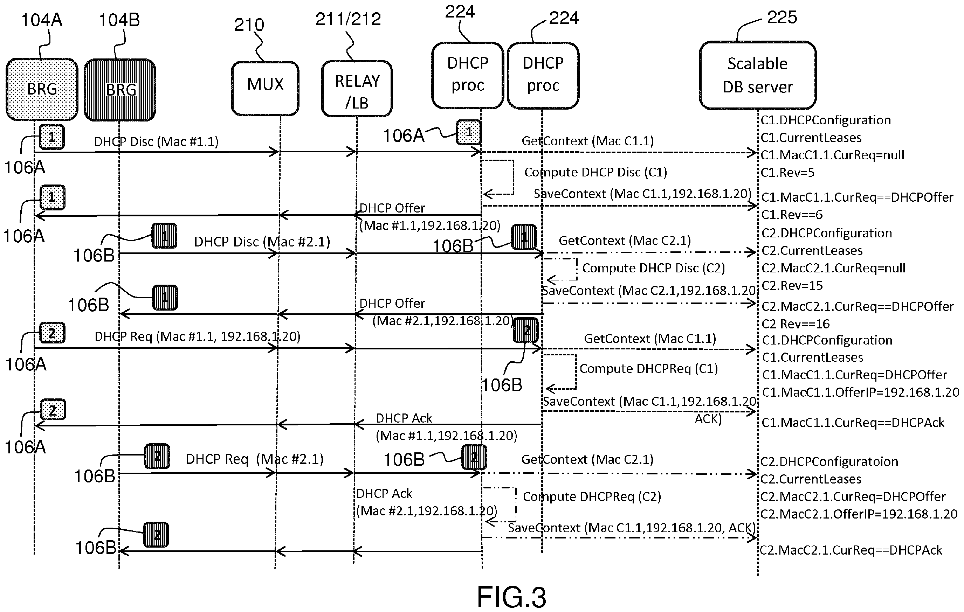

Figure 3 is a block diagram of an embodiment having a DHCP processing server such as the one provided in conjunction with Figure 2. Figure 3 provides an example where the DHCP processing server 224 can process each DHCP message (e.g. DHCP DISCOVER, DHCP REQUEST) as follows:
- obtaining the customer identification (customer ID) from the data carried by the Bootp/Option 82 of the DHCP message ;
- retrieving a context (also called configuration) from the scalable database server 225 associated with, for instance, the customer ID and the MAC address of the client terminal 106 contained in the DHCP message;
- processing the DHCP message (DHCP DISCOVER, DHCP REQUEST) according to a state recorded within the database of the database server 225 in order to establish the corresponding response (such as DHCP OFFER, DHCP ACK). In case a discrepancy appears between the received DHCP message and the associated state stored in the database of the server 225, the incorrect DHCP message (e.g. duplicate request or release from the same customer 104) received from the client can be dropped;
- attempting to write the computed target state back to the database server 225. When the write fails due to a concurrent update by another processing server 224, the considered processing server 224 can cancel the current processing and can starts over from the above-mentioned retrieving step. When the write succeeded, it can send back the response to the DHCP load balancer 222 with the customer ID information embedded in the Bootp/Option 82 of the response.

A DHCP client can have different states depending on messages which have been exchanged with a server. In particular, a database server can keep a status of the transaction step and a status of the IP address lease associated with the DHCP client to reply coherently with the different messages coming from this DHCP client. In one embodiment, the state for a client can be:
- INITIAL : DHCP_DISCOVER received,
- OFFERING: DHCP_OFFER has been sent,
- REQUESTING : DHCP_REQUEST has been received,
- BOUND : DHCP_ACK has been sent and IP address is leased.

In addition, the scalable database server 225 can be configured to maintain a consistent DHCP status (or context) for each customer. In particular, the database server 225 can be adapted to reply to specific requests (or commands) used by the DHCP processing servers 224 such as GetContext (Customer, MAC address) or SaveContext (Customer, MAC address). Such specific requests can further be used by other services (than the DHCP processing servers 224) such as monitoring, troubleshooting and scalability features (e.g. network provisioning).

In particular, the GetContext request can send back the DHCP context (or configuration) of a terminal 106, such as network information, IP address range, current leases and also the state of the DHCP Request for that particular terminal 106 (i.e. MAC address). The data returned by the GetContext request can further be tagged with a revision number allowing resolving ties in case of concurrent updates.

The SaveContext request - which can include the revision number - can indicate the lease that has been offered by a DHCP processing server 224 for that particular terminal (i.e. MAC address).

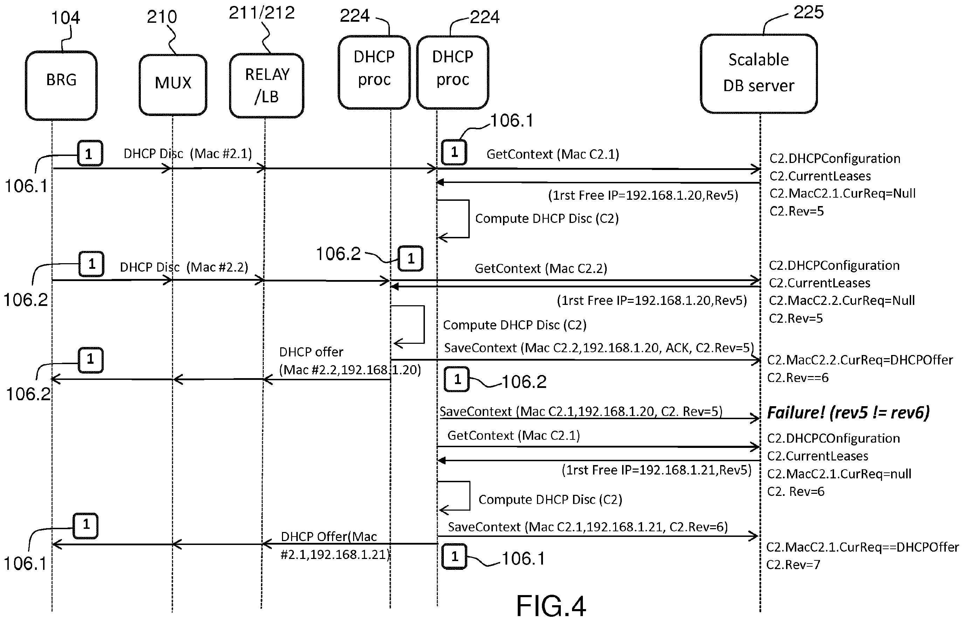

Figure 4 provides a similar embodiment to that of Figure 3, except multiple DCHP requests are received from different terminals in this case simultaneously. As shown in the Figure 4, upon receipt of a SaveContext request, the database server 225 checks the revision number and can accept the operation only if the provided revision number matches the one found in the database of the server 225. When revision numbers match, the data of the SaveContext request is then saved in the database, the revision number can be incremented and a success code can be returned. When the revision numbers do not match, no change can be done in the database by the database server 225. A failure code can be returned.

As previously stated, Figure 4 depicts a case of concurrent DHCP request (DHCP DISCOVER) from two different terminal 106.1 and 106.2 originating from a same BRG 104. The request (DHCP DISCOVER) from terminal 106.2 (MAC address #2.2) is saved in the database of the database server 225 before the end of processing of the request from terminal 106.1 (MAC address #2.1). Thus, when the DHCP processing server 224 attempts to save the state in the database associated with the terminal 106.1, the operation fails due to the detection of an outdated revision (Rev=5). The DHCP processing server 224 can start over by retrieving a fresh context from the database to allocate an IP address to the terminal 106.1 (MAC address #2.1).

The scalable database server 225 can be further configured to store terminal configurations and each particular DHCP request session from a MAC address. Depending on the back end model, the database server 225 can clean up the unused database entries. It can further implement a redundancy mechanism.

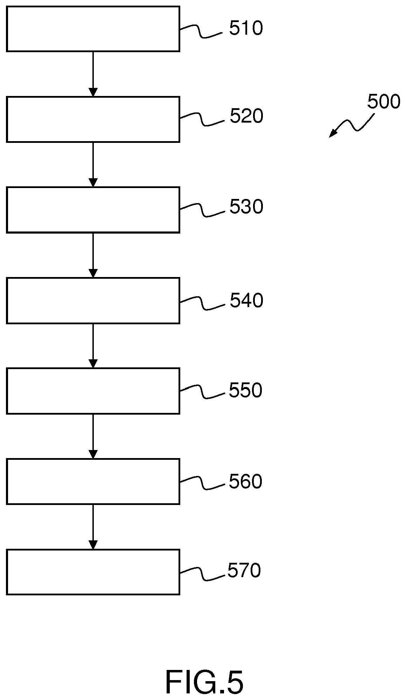

Figure 5 is a flow chart depiction illustrating an embodiment where a method 500 for data processing, at a virtual gateway 100, is provided. As shown in Figure 5, a processing request (a DHCP request in the example) is sent from a terminal 106 belonging to a LAN network 105 managed by a broadband residential gateway 104.

At step 510, the virtual gateway 100 (e.g. thanks to a multiplexing function 210) can receive, from the requesting terminal 106, one DHCP message (e.g. DHCP DISCOVER or DHCP Request) part of the DHCP request. The received DHCP message can comprise, in particular, the MAC address of the requesting terminal 106.

At step 520, the virtual gateway 100 (e.g. thanks to a DHCP relay agent 221) can insert a network identification information (such a VxLAN id) into the DHCP message received from the requesting terminal 106.

At step 530, the DHCP received message as modified can be forwarded (e.g. by a load balancer 222 of the virtual gateway 100) to the one of the DHCP processing servers 224, depending on workload information associated with the DHCP servers 224 provided by the DHCP processing unit manager 223 to the load balancer 222.

At step 540, the virtual gateway 100 (e.g. thanks to an appropriate request sent by a DHCP processing server) can retrieve, based on the network identification information extracted from the received message, context information from a database server 225 shared between the DHCP processing servers 224.

At step 550, the virtual gateway 100 (e.g. by the DHCP processing server 224) can process the DHCP received message depending on a state of the processing request, the processing request state being retrieved from the context information.

At step 560, the virtual gateway 100 (e.g. thanks to an appropriate request sent by a DHCP processing servers) can update the state of the DHCP request in the database of the database server 225, after the processing of the DHCP received message.

At step 570, the virtual gateway 100 (e.g. thanks to the DHCP processing server 225) can send a response message to the requesting terminal 106, which depends on the state of the DHCP request. When a discrepancy is detected between the DHCP received message and the corresponding state of the DHCP, the received message can be dropped.

In addition, in one embodiment, when an update of the state of the processing request in the database server 225 fails due to a concurrent update by another DHCP processing unit 224, the virtual gateway 100 can cancel the processing of the DHCP received message and can start over from the retrieving step 540. In this way, any DHCP processing request (e.g. DHCP DISCOVER, DHCP Request) can be served by any DHCP processing server 224 on a DHCP message basis.

Furthermore, a DHCP DISCOVER message from a given terminal 106 can be processed by one DHCP processing server 224 (e.g. called Host #1) while the subsequent DHCP Request message of the 2 steps handshake may be processed by another DHCP processing server 224 (e.g. called host #2). Consequently, the provided DHCP service is stateless at a customer basis, since DHCP processing servers 224 do not create or open any objects that track information regarding the received processing request sent by terminals. No information on the requesting requests is retained at the DHCP processing servers 224.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method for processing, at a network equipment (100), a processing request from a terminal (106) configured to be associated with a network (105) to which the network equipment (100) can be connected,
comprising, at the network equipment (100):
- receiving (510) from the terminal (106), a message (DHCP Disc, DHCP Req) provided as part of the processing request (DHCP Disc, DHCP Req);
- providing (520), at a relay agent (221) of the network equipment (100), a network identification information into the received message (DHCP Disc, DHCP Req);
- forwarding (530) the received message to one of a plurality of processing units (224) of the network equipment, depending on workload information associated with said processing units (224);
- retrieving (540), based on the network identification information extracted from the received message, context information from a database unit (225) shared between the processing units (225); and
- processing (550) the received message according to a state of the processing request; the processing request state being retrieved from the context information.

2. Method according to claim 1, further comprising an update (560) of the state of the processing request in the database unit (225), after processing of the received message.

3. Method according to claim 1 or 2, wherein the processing comprises sending (570) a response to the terminal (106), said response depending on the state of the processing request.

4. Method according to claims 1 to 3, wherein, when a discrepancy is detected between the received message and the corresponding state of the processing request, the received message is dropped.

5. Method according to claims 1 to 4, further comprising, when an update of the state of the processing request in the database unit (225) fails due to a concurrent update by another processing unit (224) of the network equipment (100):
- cancelling the processing (550) of the received message; and
- starting over from the retrieving step (540).

6. Method according to claims 1 to 5, wherein the processing request is a DHCP request configured to obtain an IP address.

7. Method according to claim 6, wherein the received message is either a DISCOVER message or a REQUEST message.

8. Method according to claims 1 to 7, wherein the network identification information specifies a VxLAN identification number associated with said network (105).

9. Network equipment for processing a processing request from a terminal (106) configured to be associated with a network (105) to which the network equipment (100) can be connected,
wherein it comprises:
- a receiver (210) configured to receive, from the terminal (106), a message (DHCP Disc, DHCP Req) provided as part of the processing request;
- a relay agent (221) configured to provide a network identification information into the received message (DHCP Disc, DHCP Req);
- a load balancer (222) configured to forward the received message to one of a plurality of processing units (224) of the network equipment (100), depending on workload information associated with said processing units (224);
and wherein said processing units (224) are further configured to retrieve, based on the network identification information extracted from the received message, context information from a database unit (225) shared between the processing units (224) and to process the received message according to a state of the processing request, the processing request state being retrieved from the context information.

10. Network equipment according to claim 9, wherein the database unit (225) is configured to update the state of the processing request, after the processing of the received message (DHCP Disc, DHCP Req).

11. Network equipment according to claim 9 or 10, wherein the processing unit (224) is further configured to send a response to the terminal (106), said response depending on the state of the processing request.

12. Network equipment according to claims 9 to 11, wherein, when a discrepancy is detected between the received message and the corresponding state of the processing request, the received message (DHCP Disc, DHCP Req) is dropped.

13. Network equipment for processing a processing request from a terminal (106) configured to be associated with a network (105) to which the network equipment (100) can be connected,
comprising at least one memory and at least one processing circuitry configured to perform, at the network equipment (100):
- receiving (510), from the terminal (106), a message (DHCP Disc, DHCP Req) provided as part of the processing request (DHCP Disc, DHCP Req);
- providing (520), at a relay agent (221) of the network equipment (100), a network identification information into the received message (DHCP Disc, DHCP Req);
- forwarding (530) the received message to one of a plurality of processing units (224) of the network equipment, depending on workload information associated with said processing units (224);
- retrieving (540), based on the network identification information extracted from the received message, context information from a database unit (225) shared between the processing units (225); and
- processing (550) the received message according to a state of the processing request, the processing request state being retrieved from the context information.

14. Non-transitory program storage device, readable by a computer, tangibly embodying a program of instructions executable by the computer to perform a method (500) for processing, at a network equipment (100), a processing request from a terminal (106) configured to be associated with a network (105) to which the network equipment (100) can be connected, said method comprising:
- receiving (510), from the terminal (106), one message (DHCP Disc, DHCP Req) provided as part of the processing request (DHCP Disc, DHCP Req);
- providing (520), at a relay agent (221) of the network equipment (100), a network identification information into the received message (DHCP Disc, DHCP Req);
- forwarding (530) the received message to one of a plurality of processing units (224) of the network equipment, depending on workload information associated with said processing units (224);
- retrieving (540), based on the network identification information extracted from the received message, context information from a database unit (225) shared between the processing units (225); and
- processing (550) the received message according to a state of the processing request retrieved from the context information.

15. Computer program product stored on a non-transitory computer readable medium and comprising program code instructions executable by a processor for implementing a method (500) for processing, at a network equipment (100), a processing request from a terminal (106) configured to be associated with a network (105) to which the network equipment (100) can be connected, said method comprising:
- receiving (510), from the terminal (106), a message (DHCP Disc, DHCP Req) provided as part of the processing request (DHCP Disc, DHCP Req);
- providing (520), at a relay agent (221) of the network equipment (100), a network identification information into the received message (DHCP Disc, DHCP Req);
- forwarding (530) the received message to one of a plurality of processing units (224) of the network equipment, depending on workload information associated with said processing units (224);
- retrieving (540), based on the network identification information extracted from the received message, context information from a database unit (225) shared between the processing units (225); and
- processing (550) the received message according to a state of the processing request, the processing request state being retrieved from the context information.
